# EUROPEAN PATENT APPLICATION

(11) **EP 4 445 715 A1**
(43) Date of publication of application: **16.10.2024**
(21) Application number: 22902534.1
(22) Date of filing: 10.11.2022
(51) Int. Cl.: A01D 90/10, B60P 1/42

(54) **FOLDABLE GRAIN CART**

(30) Priority: 10.12.2021 BR 102021025069
(71) Applicant: GTS Do Brasil Ltda., SC 88506-600 Lages (BR)
(72) Inventor: STRASSER, Assis, 88501-130 Lages (BR)
(74) Representative: Clarke, Modet y Cía., S.L.
(86) International application number: PCT/BR2022/050432
(87) International publication number: WO 2023/102625

(57) **Abstract**

The present invention comprises a grain cart for transporting grains or agricultural inputs wherein the tank is foldable to facilitate the transport of the equipment, mainly on highways. The proposed grain cart further has a unique chassis wherein the supports have a large attachment area connecting the chassis to the lower portion of the tank and a simple and coplanar structure formed by two longitudinal tubes shaped at the anterior end to form the trailer portion. The adopted arrangement, in addition to facilitating manufacturing and adaptation to a variety of wheelset systems, allows the structure to work predominantly in a tension regime, avoiding possible deformations of the structure and critical failures due to flexural work.

## Description

### Field of the Invention:

The present invention pertains to the field of technologies related to agricultural machinery, specifically in the field of solid storage and transport equipment in the agricultural production.

### Backgrounds of the Invention:

The mechanization of agriculture made it possible to increase agricultural production at increasingly higher rates. Currently, it is possible to find machines present at any step of agriculture, from soil preparation to harvesting. Although the mechanization has increased agricultural production and productivity, the machines used have limitations and therefore become a broad field for innovations.

The grain carts and grain transport and handling machines are used to store and transport solid materials for the agricultural production, wherein these materials can range from grains to agricultural inputs.

Usually, the most widely used grain carts in the agricultural sector have a split unloader tube, wherein, to change from a working arrangement to a transport arrangement, the upper portion is decoupled from the lower portion. Furthermore, the transport tube can also be positioned in the front, rear or side portions of the cart.

The increase in the agricultural productivity is directly related to the use of increasingly robust equipment, allowing the preparation of larger areas and the handling of large quantities of materials. In this sense, the carts need to have a large capacity and reinforced structure to accommodate this large amount of material. However, the increase in the size of the cart, and consequently in the loads it must support, generates substantial challenges in the development of these types of equipment.

Increasing the capacity of the cart inherently increases its dimensions, resulting in complications in transportation. Depending on the dimensions of the cart, it is necessary to use specific transport trucks. Furthermore, in certain countries, there is a limitation on the maximum dimensions permitted for road transport of cargo, whereby it is mandatory that transport be carried out with the help of escorts, increasing the costs of transporting equipment. In Brazil, according to the Brazilian traffic code, the maximum width for transporting indivisible cargo is 3.2 m; above this value, it is mandatory to use an escort during transport.

In addition, considering that agricultural equipment is dismantled to be transported, this requires the presence of a specialized technician to assemble the equipment on farms.

Another limitation is the structure necessary for the cart to be able to support all the loads generated by the load with the cart traveling on uneven terrain.

In view of the presented problems, the present invention proposes a grain cart with large load capacity, transport tube arranged laterally, chassis with flanged coupling for the wheelset and tank with side articulation means. In this way, to transport the cart it is only necessary to decouple the wheelsets from the chassis, since the folded tank with the side tube and chassis reach a maximum width of 3.2 m, making transportation substantially easier.

Furthermore, the cart has an innovative chassis geometry that provides greater strength and ease of manufacturing.

### State of the Art:

Some documents of the state of the art describe structures for agricultural implements and equipment related to grain transportation. However, deficiencies and problems still persist that motivate the development of new equipment that promotes greater efficiency in the transport of agricultural products.

Document US 6893202 - "Dual purpose grain cart" - describes a grain cart with a side conveyor tube and pyramidal tank, similar to the present invention. However, it presents substantial differences in relation to the present invention. The tank in the aforementioned American document does not disclose or teach the use of supports with a large area of attachment directly to the tank and chassis, providing greater stability and strength to the structure.

Furthermore, the chassis disclosed in the American patent presents the attachment of the trailer to a portion above the end of the tank, forcing the trailer to have an angle in relation to the ground, causing this portion to work under flexion. Meanwhile, the chassis of the present invention has a simpler geometry, making it easier to manufacture, and is coplanar with the trailer, making the structure work predominantly in tension regime.

Furthermore, document US 6893202 does not disclose a foldable tank to facilitate transport of this equipment.

Documents US 20050238470, US 4846621, US 5409344 and US 20130028694 describe grain carts with a tank in a substantially pyramidal shape. However, none discloses or teaches means for folding parts of the tank, facilitating the transport of the equipment.

### Brief Description of the Invention:

The present invention comprises a grain cart for transporting grains or agricultural inputs wherein the tank is foldable to facilitate transport of the equipment, mainly on highways. The proposed grain cart further has a unique chassis wherein the supports have a large attachment area connecting the chassis to the lower portion of the tank and a simple and coplanar structure formed by two longitudinal tubes shaped at the anterior end to form the trailer portion. The adopted arrangement, in addition to facilitating manufacturing and adaptation to a variety of wheelset systems, allows the structure to work predominantly in a tension regime, avoiding possible deformations of the structure and critical failures due to flexural work.

### Brief Description of the Figures:

To obtain a complete visualization of the object of this invention, the figures of the present invention in its preferred configuration are presented, to which references are made, as follows:
Figure 1 shows the profile view of the grain cart in the operating configuration.
Figure 2 shows the profile view of the grain cart wherein the side movable covering was folded into the tank.
Figure 3 shows the profile view of the grain cart in the transport configuration, wherein, to reach a width of 3.2 m, it is sufficient to fold the side movable covering into the tank and remove the right wheelset from the cart.
Figure 4 shows the profile view of the lower portion of the grain cart in the operating configuration, highlighting the coupling between the chassis and the tank.

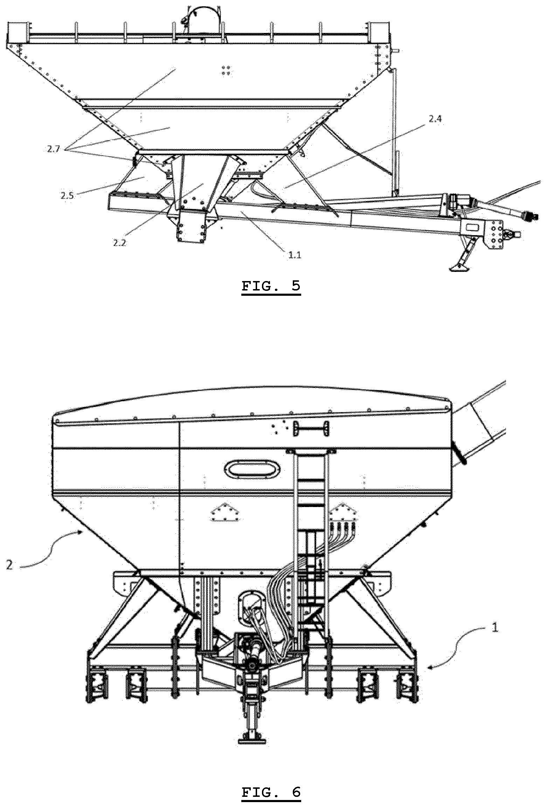

Figure 5 shows the front view of the grain cart in the operating configuration, highlighting the coupling between the chassis and the tank.
Figure 6 shows the side view of the grain cart in the operating configuration, highlighting the coupling between the chassis and the tank.
Figure 7 shows the rear view of the grain cart in the operating configuration, highlighting the coupling between the chassis and the tank.
Figure 8 shows the front view of the cart in the transport configuration, wherein the wheelsets were uncoupled from the chassis and the articulated tank portion was folded into the tank in order to reach a total width of 3.2 m.
Figure 9 shows the profile view of the cart in the transport configuration, wherein the wheelsets were uncoupled from the chassis and the articulated tank portion was folded into the tank in order to reach a total width of 3.2 m.
Figure 10 shows a profile view of the chassis highlighting the components thereof.
Figure 11 shows the side view of the chassis highlighting the components thereof.
Figure 12 shows the front view of the tank in the operating configuration.

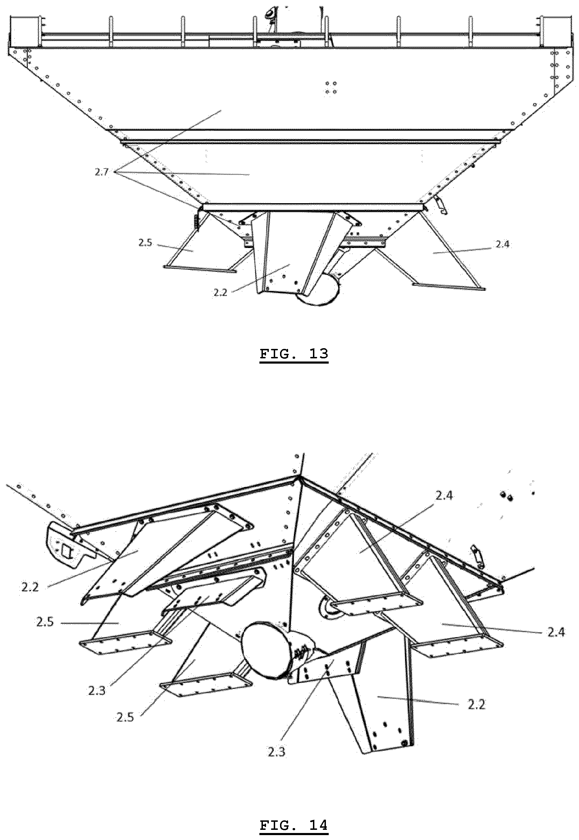

Figure 13 shows the side view of the tank in the operating configuration.
Figure 14 shows the profile view highlighting the lower portion of the tank in the operating configuration.
Figure 15 shows a sectional view of the tank in the operating configuration highlighting the articulation mechanism of the tank.
Figure 16 shows a sectional view of the tank in transport configuration highlighting the articulation mechanism of the tank.

### Detailed Description of the Invention:

The present invention refers to a grain cart for transporting grains or agricultural inputs wherein the tank has an articulation mechanism allowing it to vary from an operating configuration (open) to a transport configuration in order to facilitate the transport of the equipment, mainly via highways.

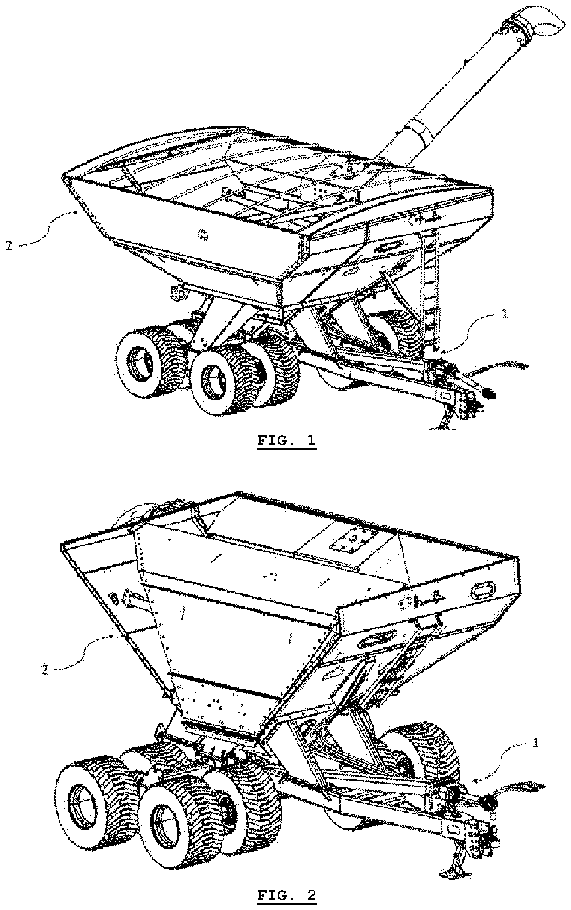

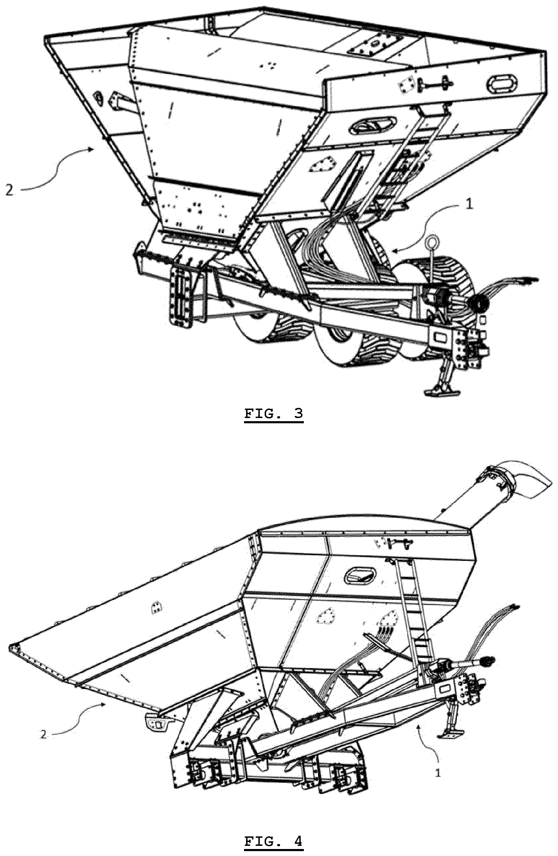

The proposed cart has a capacity in the range of 40,000 L to 45,000 L, and can be adapted to wheelsets with double axles (4 tires) or oscillating axles, as illustrated in figures 1, 2, 3 and 4, and comprises, in its preferred arrangement, at least one chassis (1), one tank (2) and one wheelset system.

The chassis (1) has the function of offering support to the tank (2), coupling the wheelset and tank system to the tractor. The chassis (1) preferably comprises at least:
two longitudinal tubes (1.1);
two transverse tubes (1.2);
a plurality of tank anchoring structures (1.3);
two wheelset anchoring structures (1.4); and
a trailer end (1.5).

The chassis (1) has a substantially rectangular geometry, wherein the longitudinal tubes (1.1) are positioned substantially parallel, wherein the angled ends are arranged to form a triangular portion, trailer end (1.5), to couple to the tractor, and the transverse tubes (1.2) are positioned substantially perpendicular to the longitudinal tubes (1.1) and arranged one at the rear end and the other in the bending region of the longitudinal tube (1.1).

The wheelset anchoring structure (1.4) comprises a substantially tubular structure arranged substantially perpendicularly to the longitudinal tubes (1.1) and with non-permanent means for coupling a wheelset system, wherein the non-permanent means may be through bolted flanges or fittings, preferably by screwed flanges. The wheelset anchoring structure (1.4) further has at least two tank anchoring structures (1.3), preferably four, located in the upper portion of the structure (1.4) for attaching the external (2.2) and internal (2.3) side supports of the tank (2). The attachment of said components can be through screwed flanges or fittings, preferably by screwed flanges.

The tank anchoring structures (1.3) have the function of attaching the tank (3) to the chassis (1), and can be arranged in different parts of the chassis (1) and in any quantity, preferably two arranged in the front portion of the longitudinal tubes (1.1) close to the bending region, two at the rearmost end of the tubes (1.1) and four in the wheelset anchoring structure (1.4), two at each end and one more external and one more internal.

The trailer end (1.5) comprises any trailer coupling system used in the field and must be attached to the longitudinal tubes (1.1).

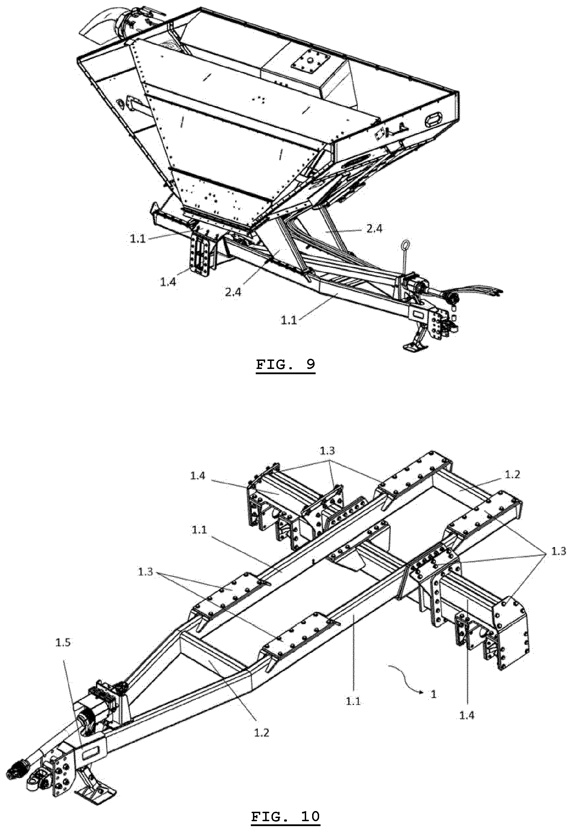

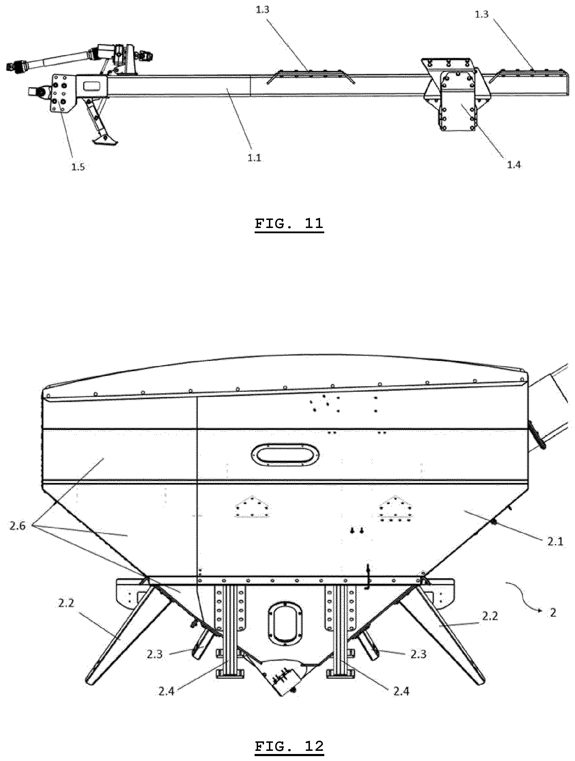

When analyzing figures 10 and 11, it is possible to note that the entire chassis structure (1) is substantially coplanar, favoring the force exerted by the tractor at the trailer end (1.5) exerting mostly tensile or compressive loads on the chassis (1). In addition, considering that the angulation of the longitudinal tube (1.1) is preferably carried out by mechanical forming and not by welding, there is no creation of a thermally affected zone and consequently problems of fragility in this region. Furthermore, the adopted arrangement facilitates the manufacturing process of the chassis (1), since all tubes are coplanar and their positioning for attachment is easier than a non-coplanar structure.

The tank (2) has the function of storing the grains or agricultural inputs during their transport; it can have any shape, preferably being substantially pyramidal, and a transport tube in any position, preferably being a laterally arranged articulated transport tube. The tank (2) preferably comprises at least:
an attached covering (2.1);
two external side supports (2.2);
two internal side supports (2.3);
two front supports (2.4);
two rear supports (2.5);
a front detachable covering (2.6);
a side movable covering (2.7);
a rear detachable covering (2.8); and
a covering articulation (2.9).

The tank (2) preferably has a pyramidal shape that helps the concentration of grains or agricultural inputs in a lower portion of the tank by the action of gravity; it has attachment supports (2.2, 2.3, 2.4, 2.5) preferably positioned in the lower third of the tank (3) with preferably two front supports (2.4) located in the front portion of the tank (2), two rear supports (2.5) located in the rear portion of the tank (2), two external side supports (2.2) located on the outermost side portion of the tank (2), and two internal side supports (2.3), positioned close to the center of the tank (2).

Said supports present a large attachment area, optimizing the distribution of forces along the structure to which they are coupled and can be attached by the means already mentioned above, preferably by screwed flanges.

The tank (2) also has a covering articulation mechanism (2.9) that allows at least a portion of the tank (2) to articulate into the tank (2), reducing the width of the same, wherein the covering articulation (2.9) is positioned in the lowest portion of the side movable covering (2.7) and the attached covering (2.1) immediately in contact, allowing pivoting movement between the side movable covering (2.7) and the attached covering (2.1) immediately below.

The covering articulation (2.9) comprises any mechanism that allows pivoting movement between two bodies, which may be a hinge or flexible material, preferably by means of a hinge mechanism. The mechanism comprises at least one articulation (2.9), preferably three equally spaced, wherein each articulation preferably comprises at least one support (2.9.1) attached to the side movable covering (2.7) and the attached covering (2.1) and an axis (2.9.2) coupled to the support (2.9.1) allowing concentric positioning between said supports (2.9.1).

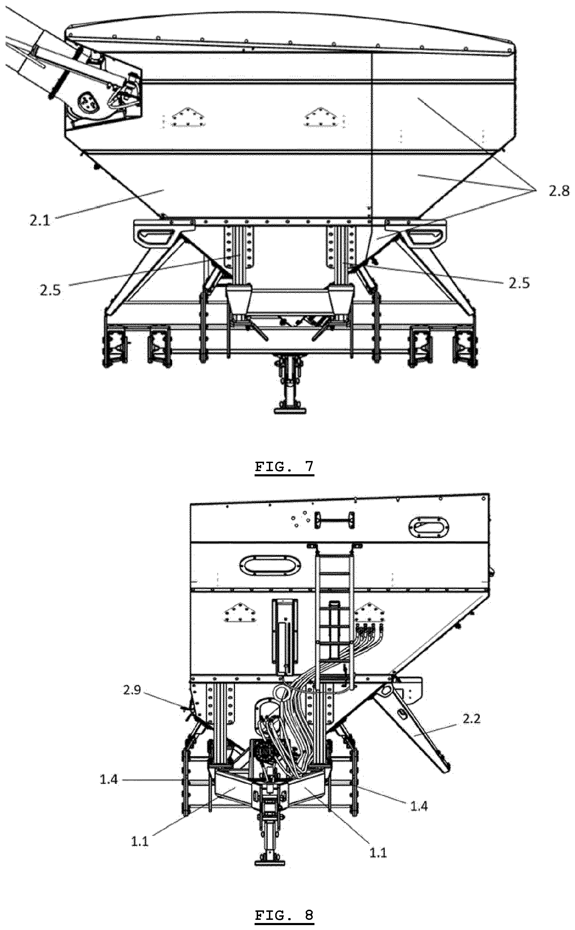

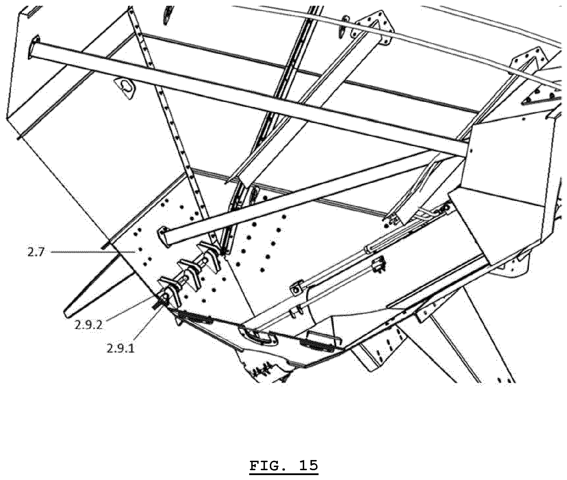

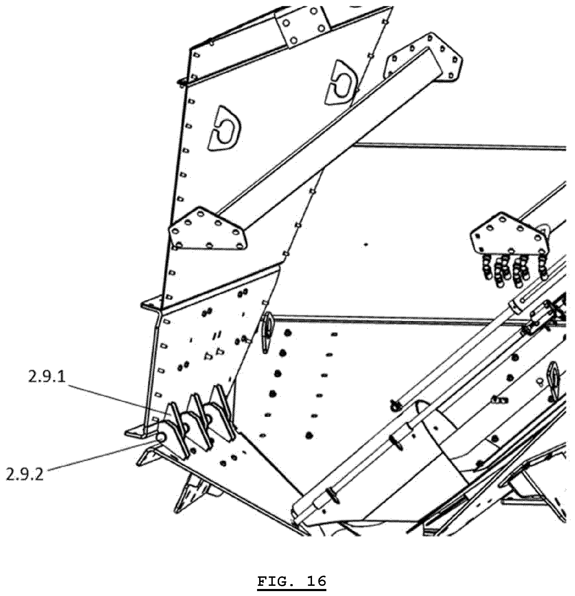

For the tank (2) to vary from an operating configuration to a transport configuration, initially the front (2.6) and rear (2.8) detachable coverings are removed and the side movable covering (2.7) is moved towards the interior of the tank (2), as can be seen in figures 2, 7, 8, 15 and 16.

Additionally, it is worth highlighting that the attachment of the detachable coverings (2.6, 2.8) can be carried out by any reversible attachment element, by using screws, fittings, locks, wherein preferably it is made by means of screws.

In this way, those skilled in the art will value the knowledge presented herein and will be able to reproduce the invention in the presented embodiments and in other variants, encompassed by the scope of the attached claims.

## Claims

1. A foldable grain cart **characterized in that** it comprises at least a chassis (1), a tank (2) and a wheelset system;
wherein at least a portion of the tank (2) comprises at least one covering articulation (2.9).

2. The cart according to claim 1, **characterized in that** said cart has a capacity of 40,000 L to 45,000 L.

3. The cart according to claim 1 or 2, **characterized in that** said cart is adapted to wheelsets with double axles (4 tires) or oscillating axles.

4. The cart according to any one of claims 1 to 3, **characterized in that** the chassis (1) couples the tank (2) and the wheelset system (3) to the tractor.

5. The cart according to any one of claims 1 to 4, **characterized in that** the chassis (1) comprises at least:
two longitudinal tubes (1.1);
two transverse tubes (1.2);
a plurality of tank anchoring structures (1.3);
two wheelset anchoring structures (1.4); and
a trailer end (1.5);
wherein the longitudinal tubes (1.1) and the transverse tubes (1.2) are coplanarly arranged.

6. The cart according to any one of claims 1 to 5, **characterized in that** the longitudinal tubes (1.1) have a bend at their front end.

7. The cart according to any one of claims 1 to 6, **characterized in that** the tank (2) has a transport and operating configuration and comprises at least:
an attached covering (2.1);
two external side supports (2.2);
two internal side supports (2.3);
two front supports (2.4);
two rear supports (2.5);
a front detachable covering (2.6);
a side movable covering (2.7);
a rear detachable covering (2.8); and
a covering articulation (2.9).

8. The cart according to any one of claims 1 to 7, **characterized in that** the transport tube is arranged laterally to the tank (2).

9. The cart according to any one of claims 1 to 8, **characterized in that** the covering articulation (2.9) is positioned in the lowest portion of at least one side movable covering (2.7) and in the attached covering (2.1) immediately in contact, allowing the pivoting movement between the side movable covering (2.7) and the attached covering (2.1) immediately below.

10. The cart according to any one of claims 1 to 9, **characterized in that** the covering articulation (2.9) comprises a mechanism that allows a pivoting movement between two bodies, which may be a hinge or a flexible material, preferably by means of a hinge mechanism.
